# EUROPÄISCHE PATENTSCHRIFT

(11) **EP 0 412 322 B1**
(45) Veröffentlichungstag und Bekanntmachung des Hinweises auf die Patenterteilung: **19.05.1993**
(21) Anmeldenummer: 90113597.0
(22) Anmeldetag: 16.07.1990
(51) Int. Cl.: B60G 11/14, B60G 11/27

(54) **Unabhängige Aufhängung eines gelenkten Rades von Kraftfahrzeugen**
Independent suspension for a steered wheel of a motor vehicle
Suspension indépendante de roue directrice de véhicule automobile

(30) Priorität: 07.08.1989 DE 3926067
(43) Veröffentlichungstag der Anmeldung: 13.02.1991
(73) Patentinhaber: Volkswagen Aktiengesellschaft, 38436 Wolfsburg (DE)
(72) Erfinder: Winter, Ingo, Dipl.-Ing., D-3172 Isenbüttel (DE)

(56) Entgegenhaltungen:
- EP-A- 0 365 516
- DE-A- 1 405 372
- FR-A- 1 407 708
- FR-A- 1 422 469
- FR-A- 2 152 754
- US-A- 3 143 360

## Beschreibung

Die Erfindung bezieht sich auf eine unabhängige Aufhängung eines gelenkten Rades von Kraftfahrzeugen der im Oberbegriff des Anspruch 1 genannten Art.

Eine unabhängige Aufhängung dieser Bauart ist beispielsweise in der DE-C2-33 42 519 dargestellt und beschrieben. Bei dieser bekannten unabhängigen Aufhängung eines gelenkten Rades mit einem unteren Querlenker und einem oberen Querlenker, der im oberhalb des Rades liegenden oberen Bereich des Radlenkers mittels eines Kugelgelenks angelenkt ist, ist für die Fahrzeugfederung eine mechanische Schraubenfeder als Teil eines innen neben dem Rad angeordneten Federdämpfers vorgesehen, welcher sich in bei Doppelquerlenkerachsen üblicher Weise einenends am Fahrzeugaufbau und anderenends auf dem unteren Querlenker abstützt.

Der Erfindung liegt nun die Aufgabe zugrunde, eine unabhängige Aufhängung der eingangs bezeichneten Art zu schaffen, die sich durch kompakte Bauweise und gutes Ansprechen der Federvorrichtung auszeichnet und in besonderer Weise für den Einsatz in Verbindung mit angetriebenen gelenkten Rädern geeignet ist.

Diese Aufgabe wird erfindungsgemäß durch die Merkmale des Patentanspruchs 1 gelöst.

Vorteilhafte Ausgestaltungen und Weiterbildungen der Erfindung sind in den Unteransprüchen angegeben.

Erfindungsgemäß ist also der untere Federteller der Federvorrichtung unter Zwischenschaltung eines Wälzlagers am Radträger abgestützt, und zwar im unmittelbaren Bereich des in seinem oberhalb des Rades liegenden oberen Bereich angeordneten Kugelgelenks, wobei die Federvorrichtung räumlich derart ausgerichtet ist, daß ihre Federmittenachse durch die Kugelmitte des Kugelgelenkes verläuft.

Den unteren Federteller der Federvorrichtung einer unabhängigen Aufhängung eines gelenkten Rades unter Zwischenschaltung eines Lagers am Radträger abzustützen, und zwar im Bereich des in seinem oberen Bereich angeordneten Kugelgelenks, über das ein oberer Querlenker angelenkt ist, ist für sich aus der FR-A-2 152 754 bereits bekannt.

Bei dieser bekannten Aufhängung weist der Radträger einen innen neben dem Rad bis etwa zum Felgenrand hochragenden Arm auf, an den der obere Querlenker mittels eines Kugelgelenks angelenkt ist. Das einen Kugelkopf sowie zwei einander diametral gegenüberliegende Kugelzapfen aufweisende Kugelgelenk ist mit seinem unteren Kugelzapfen am hochragenden Arm, d. h. im oberen Bereich des Radträgers angeschraubt, während der obere Kugelzapfen ein Lager in Form einer Gleitbüchse trägt, über die sich der untere Federteller der Schraubfeder abstützt. Die innen neben dem Rad liegende Federvorrichtung dieser bekannten Aufhängung benötigt innen neben dem gelenkten Rad ähnlich viel Bauraum wie die aus der DE-C2-33 42 519 bekannte Aufhängung.

Das Fahrzeuggewicht wird auf diese Weise - unter Umgehung der Querlenkeranordnungen - sehr reibungsarm unmittelbar auf dem Radträger abgestützt, was zu einem feinfühligen Ansprechverhalten der Federvorrichtung führt. Dieses feinfühlige Ansprechen wird dadurch unterstützt, daß der die Federvorrichtung tragende untere Federteller der oberhalb des gelenkten Rades liegenden Feder beim Ein- und Ausfedern des Rades nur geringe Neigungsänderungen erfährt, in der Federvorrichtung also kaum Verzwängungen auftreten.
Durch die Anordnung der Luft- oder Schraubenfeder oberhalb des gelenkten Rades wird für den Konstrukteur außerdem auf der Radinnenseite zusätzliche Gestaltungsfreiheit gewonnen für die räumliche Anordnung der unteren Querlenkeranordnung, der Spurstange des gelenkten Rades sowie - falls ein angetriebenes Rad vorliegt - der Antriebshalbwelle.

Anhand zweier in der Zeichnung dargestellter Ausführungsbeispiele wird die Erfindung nachstehend näher erläutert.

In der Zeichnung zeigen
- Fig. 1: eine Einzelradaufhängung gemäß einem ersten Ausführungsbeispiel der Erfindung in Fahrzeuglängsrichtung gesehen,
- Fig. 2: eine entsprechende Teilansicht einer solchen Einzelradaufhängung gemäß einem zweiten Ausführungsbeispiel und
- Fig. 3: eine entsprechende Teilansicht eines dritten Ausführungsbeispiels.

Beziffert und dargestellt sind im wesentlich lediglich die für das Verständnis der Erfindung notwendigen Einzelheiten der erfindungsgemäßen unabhängigen Aufhängung eines gelenkten Rades.

Ein das lenkbare und angetriebene Rad 1 tragender Radträger (Achsschenkel) 2 ist über eine in seinem radschüsselnahen unteren Bereich in üblichen, nicht weiter bezifferten Kugelgelenken gelenkig an ihm angreifende untere Querlenkeranordnung 3 sowie über eine in seinem oberhalb des gelenkten Rades 1 liegenden oberen Bereich mittels eines Kugelgelenks 4 gelenkig an ihm angreifende obere Querlenkeranordnung 5 schwenkbar am nur angedeuteten Fahrzeugaufbau 6 angelenkt. Die aufbauseitigen oberen und unteren Lenkerlager sind hierbei nicht weiter beziffert.

Im Ausführungsbeispiel ist die untere Querlenkeranordnung 3 als Mehrlenkeranordnung mit zwei separaten Einzelquerlenkern 31 und 32 ausgebildet, welche jeweils einzeln mittels eines Kugelgelenks am Radträger 2 angelenkt sind. Eine solche Ausbildung ist für die Erfindung jedoch nicht zwingend; grundsätzlich könnte stattdessen z. B. auch ein einstückiger Querlenker in Form eines Dreiecklenkers und mit nur einer radseitigen Kugelgelenkanbindung eingesetzt werden.

Die obere Querlenkeranordnung besteht im Ausführungsbeispiel aus einem einzelnen Querlenker 5, welcher mittels eines Kugelgelenks 4 oberhalb des gelenkten Rades 1 am Radträger 2 angelenkt ist. Grundsätzlich ist es aber auch möglich, auch als obere Querlenkeranordnung eine bekannte Mehrlenkeranordnung, z. B. nach Art der DE-PS 31 38 850 oder der EP-OS 265 959, einzusetzen.

Die Fahrzeugabfederung erfolgt in den Ausführungsbeispielen über eine kurz bauende mechanische Schraubenfeder 7 mit ein gezogenen Wicklungsenden, welche oberhalb des gelenkten Rades angeordnet ist und sich mit ihrem oberen Ende über einen oberen Federteller 8 am Fahrzeugaufbau 6 abstützt. Das untere Ende der Schraubenfeder 7 wird von einem unteren Federteller 9 getragen, welcher unter Zwischenschaltung eines Wälzlagers, hier eines reinen Axiallagers 10 direkt am Radträger 2 befestigt ist, und zwar unmittelbar im Bereich des mit dem oberen Querlenker 5 zusammenwirkenden Kugelgelenks 4. Die Schraubenfeder 7 ist dabei räumlich derart ausgerichtet, daß ihre mit 15 bezifferte Federmittenachse durch die Kugelmitte des Kugelgelenks 4 verläuft.

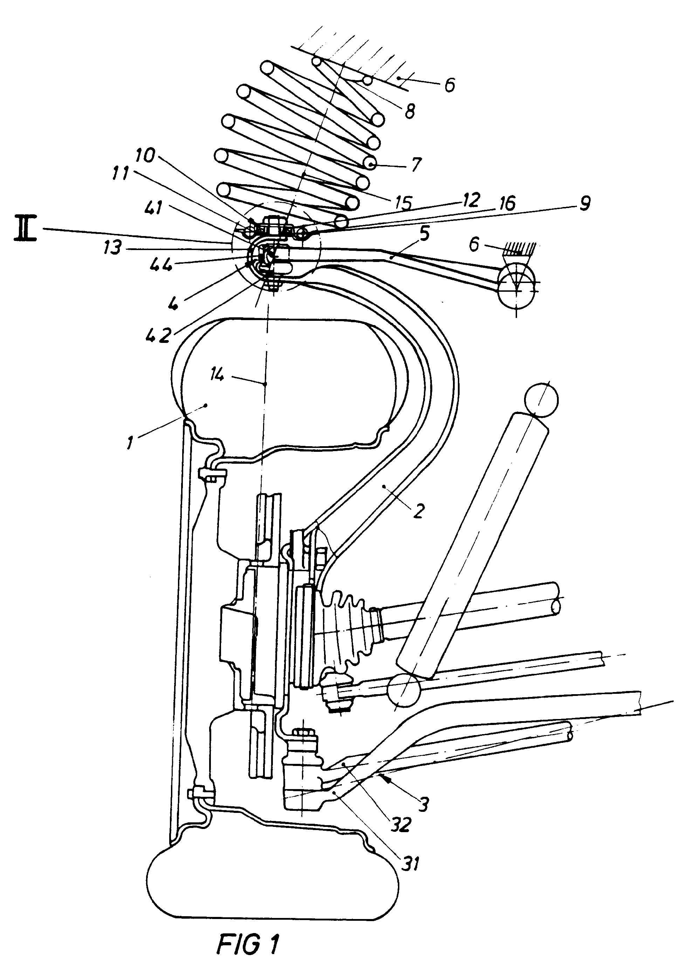

Im Ausführungsbeispiel gemäß Fig. 1 ist ein konventionelles einfaches Kugelgelenk 4 mit Kugelkopf 41 und Kugelzapfen 42 eingesetzt, Im dargestellten Ausführungsbeispiel ist das den Kugelkopf 41 aufnehmende Gehäuse 44 des Kugelgelenks am oberen Querlenker 5 befestigt und der Kugelzapfen 42 am oberen Ende des Radträgers 2 angeschraubt. Erforderlichenfalls ist es jedoch auch ohne weiteres möglich, den Kugelzapfen 42 am oberen Querlenker 5 anzuschrauben und das Gehäuse des Kugelgelenks am Radträger 2 zu befestigen.

Im Ausführungsbeispiel der Fig. 1 weist der Radträger 2 einen das Kugelgelenk 4 mit Abstand übergreifenden, in der dargestellten Ansicht etwa U-förmigen Fortsatz 13 auf, an den die untere, d. h. die radträgerseitige Lagerschale 11 des Wälzlagers 10 befestigt ist. Die auf den Kugelkörpern 16 des Wälzlagers abrollende obere Lagerschale 12 trägt ihrerseits den unteren Federteller 9.

Das Fahrzeuggewicht ist so über die Federvorrichtung 7 und das Wälzlager 10 - unter Umgehung der Querlenkeranordnungen - leicht drehbar unmittelbar auf dem Radträger 2 abgestützt. Die Querlenker 3 und 5 übernehmen ihrerseits lediglich die Führung des Radträgers in Längs- und Querrichtung.

Um unerwünschte Lenkreaktionen zu vermeiden, ist die Federvorrichtung 7 in den dargestellten Ausführungsbeispielen räumlich derart ausgerichtet, daß sich ihre mit 15 bezifferte Federmittenachse mit der Spreizachse 14 schneidet, deren Lage bekanntlich durch das obere Kugelgelenk 4 und das relevante untere - im Ausführungsbeispiel fiktive - radseitige Querlenkergelenk festgelegt ist.

Grundsätzlich ist es natürlich auch möglich, durch gezieltes Verlegen der Federmittenachse eine bestimmte erwünschte Lenkreaktion zu erzielen, um z. B. einen besseren Lenkungsrücklauf zu erzeugen.

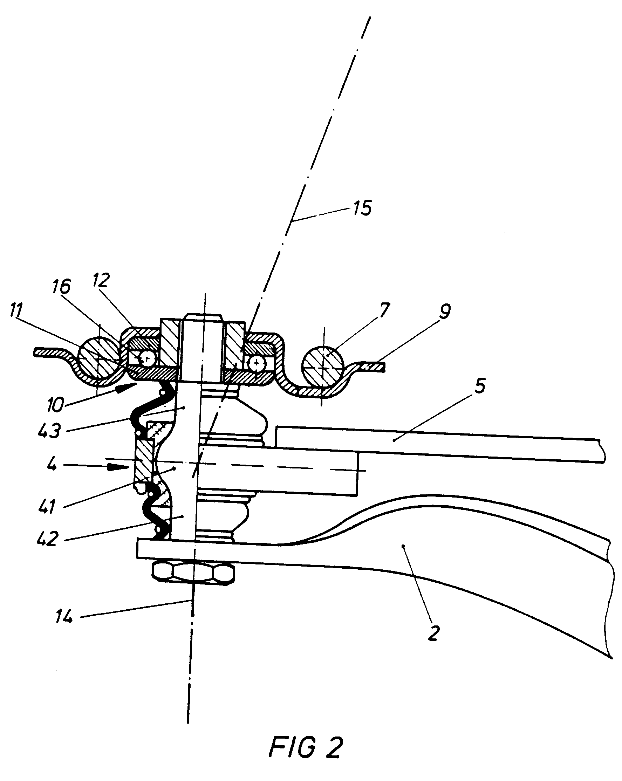

Eine unter Umständen noch kompaktere Baueinheit läßt sich erzielen, wenn - wie im Ausführungsbeispiel gemäß Fig. 2 - das radseitige Kugelgelenk 4 des oberen Querlenkers 5 auch die Abstützung des Fahrzeuggewichts mit übernimmt. Bei dieser Anordnung besitzt das Kugelgelenk 4 zwei einander diametral gegenüberliegende Kugelzapfen 42 und 43, von denen der eine, nämlich Kugelzapfen 42 fest mit dem Radträger 2 verschraubt ist. Am zumindest annähernd vertikal nach oben ragenden zweiten Kugelzapfen 43 ist unmittelbar die radträgerseitige Lagerschale 11 des Axiallagers 10 befestigt. Auch bei dieser Anordnung stützt sich das Fahrzeuggewicht somit über die Federvorrichtung 7, das als Axiallager ausgebildete Wälzlager 10 und die beiden Kugelzapfen 43, 42 des Kugelgelenks 4 leicht drehbar unmittelbar, d.h. unter Umgehung der Querlenker, auf dem Radträger 2 ab. Das Kugelgelenk 4 übernimmt in diesem Ausführungsbeispiel also zwei voneinander völlig getrennte Aufgaben, nämlich die gelenkige Anbindung dem Radträgers 2 am oberen Querlenker 5 sowie die Abstützung des Fahrzeuggewichts auf dem Radträger 2.

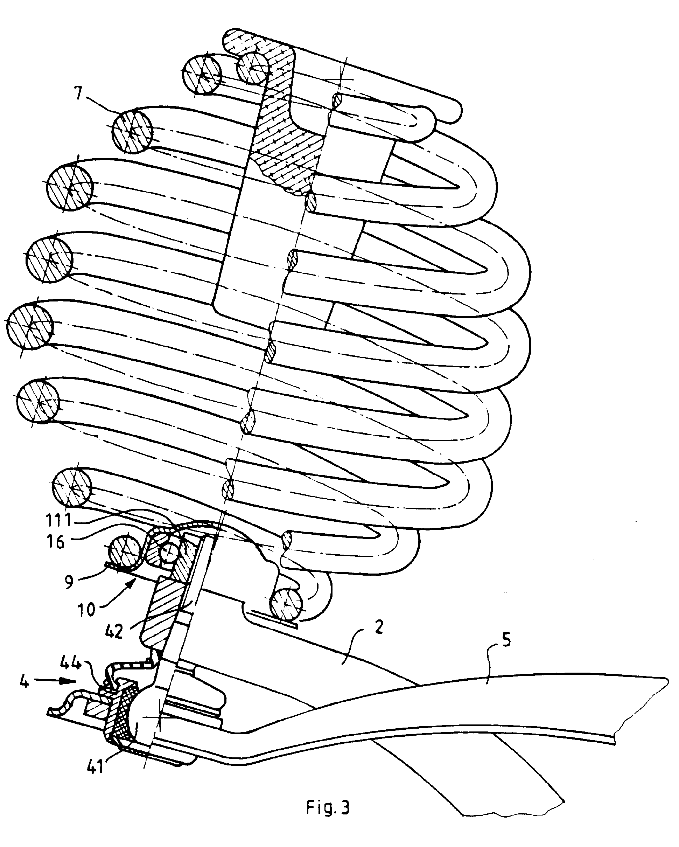

Eine vergleichbare kompakte Baueinheit ergibt sich, wenn - wie im Ausführungsbeispiel gemäß Fig. 3 dargestellt - der Kugelzapfen 42 des Kugelgelenks am oberen Ende des Radträgers 2 mit nach unten hängendem Kugelkopf 41 befestigt ist. Radträger 2 und oberer Querlenker 5 sind dabei z. B. durch entsprechende Kröpfung oder durch entsprechende Durchgrifföffnungen derart ausgebildet und angeordnet, daß das freie Ende des oberen Querlenkers 5, an dem das Gehäuse 44 des Kugelgelenks 4 befestigt ist, unterhalb des oberen Endes des Radträgers 2 liegt.

Mit Vorteil wird dabei als Wälzlager 10 ein Rillenkugellager ausgebildet, dessen radial innerer Laufring 111 dann vom Kugelzapfen 44 durchgriffen und zusammen mit diesem am oberen Ende des Radträgers 12 angeschraubt wird.

Die erfindungsgemäße Aufhängung zeichnet sich durch ihren raumsparenden kompakten Aufbau und die besonders reibungsarme Abstützung des Fahrzeuggewichts aus. Es ergibt sich ein gutes Ansprechverhalten der Federvorrichtung, was durch die nur geringen Neigungsänderungen des unteren Federtellers beim Ein- und Ausfedern unterstützt wird, sowie geringe Lenkmomente.

## Patentansprüche

1. Unabhängige Aufhängung eines gelenkten Rades (1) von Kraftfahrzeugen,
mit einem Radträger (Achsschenkel 2), der durch eine in seinem radschüsselnahen unteren Bereich gelenkig angreifende untere Lenkeranordnung, vorzugsweise Querlenkeranordnung (3), sowie durch eine mittels eines Kugelgelenks (4) in seinem oberhalb des gelenkten Rades (1) liegenden oberen Bereich angelenkte obere Lenkeranordnung, vorzugsweise Querlenkeranordnung (5), schwenkbar am Fahrzeugaufbau (6) angelenkt ist, und mit einer als Schraubenfeder o. ä. ausgebildeten Federvorrichtung (7), die sich mit ihrem oberen Ende über einen oberen Federteller (8) am Fahrzeugaufbau (6) und mit ihrem unteren Ende über einen unteren Federteller (9) am Radträger/Lenkeranordnung-Verbund abstützt,
**dadurch gekennzeichnet,**
daß der untere Federteller (9) der Federvorrichtung (7) unter Zwischenschaltung eines Wälzlagers (10) am Radträger (2) abgestützt ist, und zwar im Bereich des in seinem oberhalb des gelenkten Rades (1) liegenden oberen Bereich angeordneten Kugelgelenks (4),
und daß die Federmittenachse (15) durch die Kugelmitte des Kugelgelenks (4) verläuft.

2. Unabhängige Aufhängung nach Anspruch 1,
**dadurch gekennzeichnet,**
daß der Radträger (2) einen das Kugelgelenk (4) mit Abstand übergreifenden Fortsatz (13) aufweist, auf dem die radträgerseitige Lagerschale (11) des Wälzlagers (10) - oberhalb des Kugelgelenks (4) liegend - starr befestigt ist.

3. Unabhängige Aufhängung nach Anspruch 1,
**dadurch gekennzeichnet,**
daß das Kugelgelenk (4) einen Kugelkopf (41) mit zwei einander diametral gegenüberliegenden Kugelzapfen (42, 43) aufweist, von denen der eine fest mit dem Radträger (2) und der andere fest mit der radträgerseitigen Lagerschale (11) des Wälzlagers (10) verbunden ist.

4. Unabhängige Aufhängung nach Anspruch 1,
**dadurch gekennzeichnet,**
daß das u. a. aus Kugelkopf (41), Kugelzapfen (42) und Gehäuse (44) bestehende Kugelgelenk (4) hängend angeordnet ist, indem der Kugelzapfen (42) mit nach unten hängendem Kugelkopf (41) am oberhalb des gelenkten Rades (1) liegenden oberen Ende des Radträgers (2) und das Gehäuse (44) am freien Ende der oberen Querlenkeranordnung (5) befestigt ist, wobei der Radträger (2) und die obere Querlenkeranordnung (5) durch entsprechende Kröpfung oder durch entsprechende Durchgriffsöffnungen derart ausgebildet und angeordnet sind, daß des freie Ende der oberen Querlenkeranordnung (5) unterhalb des oberen Endes des Radträgers (2) liegt.

5. Unabhängige Aufhängung nach Anspruch 4,
**dadurch gekennzeichnet,**
daß das Wälzlager (10) als Rillenkugellager ausgebildet ist, dessen radial innerer Laufring (111) vom Kugelzapfen (42) durchgriffen und zusammen mit diesem am oberen Ende des Radträgers (2) angeschraubt ist.

6. Unabhängige Aufhängung nach einem der Ansprüche 1 bis 5,
**dadurch gekennzeichnet,**
daß sich die Federmittenachse (15) mit der durch das Kugelgelenk (4) und das - gegebenenfalls fiktive - untere radseitige Lenkergelenk verlaufenden Spreizachse (14) bzw. deren Verlängerung schneidet.

## Claims

1. Independent suspension of a controlled wheel (1) of a motor vehicle having a wheel bearer (stub axle 2) which is pivotably articulated to the motor vehicle body (6) by means of a connecting rod arrangement, preferably a transverse connecting rod arrangement (3), which engages in an articulated manner in its lower region in the proximity of the wheel bowl as well as by means of an upper connecting rod arrangement, preferably a transverse connecting rod arrangement 5, which is articulated in its upper region lying above the control wheel (1) and having a resilient device (7) which is formed as a coil spring or similar and which is supported with its upper end by way of an upper spring plate (8) on the motor vehicle body (6) and with its lower end by way of a lower spring plate (9) on the wheel bearer/connecting rod arrangement combination, characterised in that the lower spring plate (9) of the resilient device (7) is supported with the interposition of a roller bearing (10) on the wheel bearer (2) and namely in the region of the ball Joint (4) disposed in its upper region lying above the controlled wheel (1), and furthermore that the spring centre axis (15) extends through the ball centre of the ball joint (4).

2. Independent suspension according to claim 1, characterised in that the wheel bearer (2) comprises an extension piece (13) which overlaps the ball Joint (4) with a clearance and the bearing shell (11) on the wheel bearer side of the roller bearing (10), lying above the ball joint (4), is rigidly attached to the said extension piece (13).

3. Independent suspension according to claim 1, characterised in that the ball joint (4) comprises a ball head (41) having two ball journals (42, 43) lying diametrically opposite each other and one of the said ball journals is fixedly connected to the wheel bearer (2) and the other ball journal is fixedly connected to the bearing shell (11) on the wheel bearer side of the roller bearing (10).

4. Independent suspension according to claim 1, characterised in that a ball joint (4) comprising amongst other things a ball head (41), ball journal (42) and housing (44) is disposed in a manner so as to hang, in that the ball journal (42) having a downwards hanging ball head (41) is attached at the upper end of the wheel bearer (2) lying above the controlled wheel (1) and the housing (44) is attached at the free end of the upper transverse connecting rod arrangement (5), wherein the wheel bearer (2) and the upper transverse connecting rod arrangement (5) are formed and disposed by means of a corresponding right-angled bend or by means of corresponding passage openings in such a way that the free end of the upper transverse connecting rod arrangement (5) lies below the upper end of the wheel bearer (2).

5. Independent suspension according to claim 4, characterised in that the roller bearing (10) is formed as a groove ball bearing and the ball journal (42) passes through the radial inner bearing race (111) of the groove ball bearing and the said bearing race (111) is screwed together with the ball journal (42) at the upper end of the wheel bearer (2).

6. Independent suspension according to one of claims 1 to 5 characterised in that the spring centre axis (15) intersects with the expanding axis (14), and/or its extension, extending through the ball joint (4) and the, if necessary fictive, lower connecting rod joint on the wheel side.

## Revendications

1. Suspension indépendante d'une roue directrice (1) de véhicules automobiles, comprenant un support de roue (jambe d'essieu 2) qui est articulé de manière oscillante sur le châssis (6) du véhicule au moyen d'une structure inférieure à bras oscillants, de préférence une structure (3) à bras oscillant transversal, qui l'attaque par articulation dans sa région inférieure proche du disque de la roue, ainsi qu'au moyen d'une structure supérieure à bras oscillant, de préférence une structure (5) à bras oscillant transversal, qui est articulée au moyen d'une articulation à rotule (4) dans sa région supérieure située au-dessus de la roue directrice (1), ladite suspension comprenant par ailleurs un dispositif amortisseur (7) conformé en ressort hélicoïdal ou analogue, dont l'extrémité supérieure prend appui contre le châssis (6) du véhicule au moyen d'une coupelle supérieure (8) et dont l'extrémité inférieure prend appui au moyen d'une coupelle inférieure (9) contre une combinaison support de roue/structure à bras oscillant, caractérisée en ce que la coupelle inférieure (9) du ressort du dispositif amortisseur (7) prend appui contre le support (2) de la roue avec interposition d'un roulement à billes (10) et plus particulièrement dans la région de l'articulation à rotule (4) disposée dans sa région supérieure qui est située au-dessus de la roue directrice (1), et en ce que l'axe de symétrie (15) du ressort passe par le centre de la rotule de l'articulation à rotule (4).

2. Suspension indépendante selon la revendication 1, caractérisée en ce que le support (2) de la roue comporte un prolongement (13) passant à distance au-dessus de l'articulation à rotule (4) et sur lequel le chemin de roulement (11), côté support de la roue, du roulement à billes (10) - situé au-dessus de l'articulation à rotule (4) - est étroitement fixé.

3. Suspension indépendante selon la revendication 1, caractérisée en ce que l'articulation à rotule (4) comprend une tête sphérique (41) et deux pivots à rotule diamétralement opposés (42, 43), dont l'un est fixé sur le support (2) de la roue et l'autre est fixé sur le chemin de roulement (11), côté support de la roue, du roulement à billes (10).

4. Suspension indépendante selon la revendication 1, caractérisée en ce que l'articulation à rotule (4) se composant notamment d'une tête sphérique (41), d'un pivot à rotule (42) et d'un logement (44), est montée avec la tête en bas, le pivot à rotule (42), dont la tête sphérique (41) est disposée au bas, étant fixé à l'extrémité supérieure, située au-dessus de la roue directrice (1), du support (2) de la roue et le logement (44) étant fixé à l'extrémité libre de la structure supérieure (5) à bras oscillant transversal, le support (2) de la roue et la structure supérieure (5) à bras oscillant transversal comportant un coude correspondant ou un trou correspondant de passage et étant disposés de manière que l'extrémité libre de la structure supérieure (5) à bras oscillant transversal soit située sous l'extrémité supérieure du support (2) de la roue.

5. Suspension indépendante selon la revendication 4, caractérisée en ce que le roulement à bille (10) est un roulement rainuré à billes dont la bague de roulement radialement intérieure (111) est traversée par le pivot à rotule (42) et vissée avec ce dernier sur l'extrémité supérieure du support (2) de la roue.

6. Suspension indépendante selon l'une des revendications 1 à 5, caractérisée en ce que l'axe de symétrie (15) du ressort coupe l'axe d'affaissement (14) ou son prolongement qui passe par l'articulation à rotule (4) et l'articulation - éventuellement fictive - côté roue, du bras oscillant inférieur.
